# EUROPÄISCHE PATENTANMELDUNG

(11) **EP 1 186 871 A1**
(43) Veröffentlichungstag der Anmeldung: **13.03.2002**
(21) Anmeldenummer: 01117505.6
(22) Anmeldetag: 20.07.2001
(51) Int. Cl.: G01K 1/16, G01K 7/18

(54) **Temperaturfühler**

(30) Priorität: 05.09.2000 DE 10043977
(71) Anmelder: Siemens Building Technologies AG, 8008 Zürich (CH)
(72) Erfinder: Huber, Wolfgang, 6330 Cham (CH)
(74) Vertreter: Zedlitz, Peter, Dipl.-Inf.

(57) **Zusammenfassung**

Die vorliegende Erfindung beschreibt einen Temperaturfühler (1) zur Messung einer Temperatur, umfassend eine Hülse (2) und ein in der Hülse angeordnetes Messelement (3) welches mit einem Anschlusskabel (5) verbunden ist, wobei die Hülse (2) im Bereich ihrer Öffnung (9) eingepresst (8) ist.

Die Hülse weist zumindest im Bereich des Messelementes (3) eine Einbuchtung (6) auf, um den Temperaturfühler an einen Messgegenstand anlegen zu können. Die Hülse (2) weist zumindest im Bereich ihrer Öffnung (9) einen zylindrischen Querschnitt auf.

## Beschreibung

Die vorliegende Erfindung betrifft einen Temperaturfühler nach Anspruch 1 Die Erfindung betrifft weiter die Verwendung des Temperaturfühlers nach dem unabhängigen Verwendungsanspruch.

Derartige Temperaturfühler sind für unterschiedliche Zwecke und Anwendungen bereits bekannt. So ist beispielsweise aus der CH 673 061 A5 ein Temperaturfühler bekannt, der aus einer Hülse besteht, in der ein Messelement angeordnet ist. Das Messelement ist über Anschlussdrähte mit einem Kabel verbunden, welches seinerseits mit einer Auswertestelle verbunden ist. Über durch Rollieren erzeugte Rillen am Kabeleintritt der Hülse ist das Kabel gegen Herausreissen gesichert. Der Temperaturfühler wird als Tauchfühler verwendet.

Ein solcher Temperaturfühler kann jedoch nicht als Anlegefühler für einen Messgegenstand, beispielsweise ein Rohr, verwendet werden, da die Wärmeübertragung ungenügend ist. Zwar sind spezielle Temperaturfühler mit speziellen Formen bekannt, die ein Anlegen an einen Messgegenstand erlauben. Diese Fühler können jedoch am Kabeleintritt nur durch Vergiessen mit einem Kunstharz verschlossen werden, was zu undichten Fühlern und damit zu einer geringen Lebensdauer des Fühlers führt.

Der vorliegenden Erfindung liegt die Aufgabe zugrunde, einen Temperaturfühler bereitzustellen, welcher beim Anlegen an einen Messgegenstand einen guten Wärmeübergang und eine hohe Lebensdauer aufweist.

Die genannte Aufgabe wird erfindungsgemäss durch die in den unabhängigen Ansprüche angegebenen Merkmale gelöst.

Kern der Erfindung ist es somit, dass die Hülse zumindest im Bereich des Messelementes eine Einbuchtung aufweist, um den Temperaturfühler an einen Messgegenstand anlegen zu können und dass die Hülse zumindest im Bereich ihrer Öffnung einen zylindrischen Querschnitt aufweist.

Weitere vorteilhafte Ausgestaltungen der Erfindung ergeben sich aus den abhängigen Ansprüchen.

Ein bevorzugtes Ausführungsbeispiel der erfindungsgemässen Vorrichtung bzw. des erfindungsgemässen Verfahrens wird anhand der nachfolgenden Zeichnungen näher erläutert.

Dabei zeigen:
- Fig. 1: die Seitenansicht eines Temperaturfühlers;
- Fig. 2: den Querschnitt durch den Temperaturfühler entlang der Linie II-II in Fig. 1;
- Fig. 3: eine Ansicht von oben auf den Temperaturfühler.

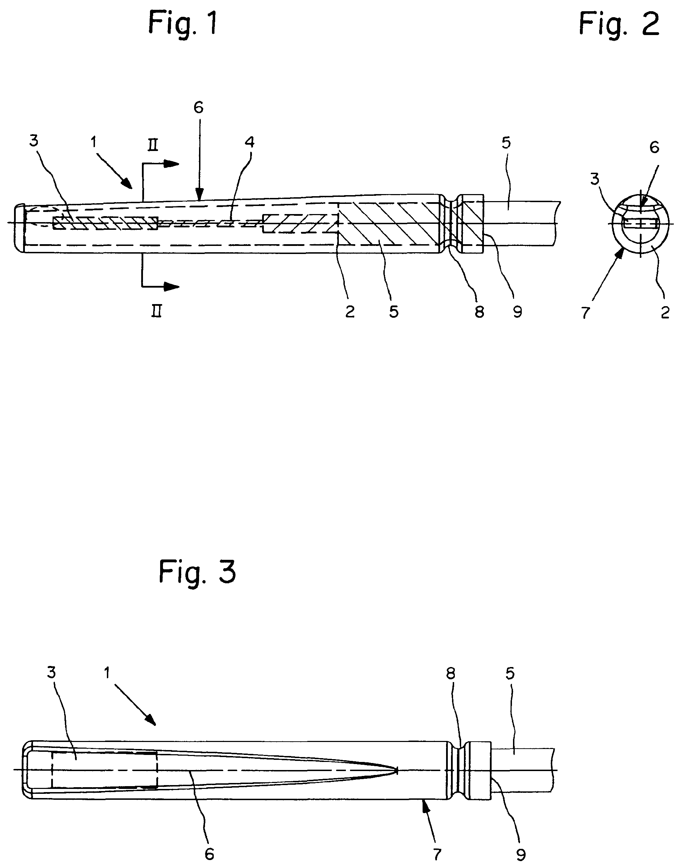

Die Figuren 1, 2 und 3 zeigen schematisch einen erfindungsgemässen Temperaturfühler 1, umfassend eine Hülse 2, ein in der Hülse 2 angeordnetes Messelement 3, welches über Anschlussdrähte 4 mit einem Anschlusskabel 5 verbunden ist. Dieses Anschlusskabel 5 ist seinerseits mit einer nicht gezeigten Auswerteschaltung verbunden. Das Anschlusskabel 5 ist vorzugsweise ein zweiadriges Litzenkabel mit einem Aussenmantel, oder ein dreiadriges oder vieradriges Litzenkabel für Dreileiter- oder Vierleitermessung mit einem Aussenmantel. Die Materialien des Kabels sind entsprechend den zu messenden Temperaturen auszuwählen. Als Messelement 3 können beispielsweise allgemein bekannte temperaturabhängige Widerstandselemente wie Widerstandsdrähte oder Halbleiter vom Kalt- oder Heissleitertyp verwendet werden. Die Hülse 2 weist eine Einbuchtung 6 auf, welche nur über einen Teil der Hülse verläuft, so dass zumindest an der Öffnung der Hülse 9 ein zylindrischer Querschnitt 7 verbleibt, siehe Fig. 2. Die Einbuchtung 6 ist dabei vorzugsweise im Bereich des Messelementes 3 am grössten.

Bei der Herstellung des Temperaturfühlers 1 wird die mit einer wie oben beschriebenen Einbuchtung versehene Hülse 2 zuerst mit einer Wärmeleitpaste und dann mit einem Kunstharz gefüllt. Danach wird das Messelement 3 zusammen mit dem Anschlusskabel in die Hülse eingeschoben. Dann wird die Hülse im Bereich des Kabeleintritts 8 durch rollieren oder verstemmen dicht verschlossen. Dies ist erfindungsgemäss möglich, da im Bereich der Öffnung der Hülse 9 ein zylindrischer Querschnitt vorhanden ist. Das Profil der Rollierung ist dabei rund wie in den Figuren dargestellt, es kann aber beliebig gewählt werden, insbesondere auch polygon. Auch sind mehrere Rollierungen möglich.
Durch die Einbuchtung 6 kann der Temperaturfühler 1 neben der Verwendung in einer Tauchhülse auch an ein Rohr angelegt werden. Die Einbuchtung hat dabei keinerlei negative Einflüsse auf die Verwendung des Temperaturfühlers in einer Tauchhülse. Beim Anlegen des Temperaturfühlers 1 an eine Rohr wird durch die Einbuchtung 6 die Wärmeübertragung gegenüber einem zylindrischen Temperaturfühler stark verbessert und damit die Ansprechzeit des Temperaturfühlers 1 mit Einbuchtung stark reduziert, ungefähr um einen Faktor 3.

Selbstverständlich ist die Erfindung nicht auf die gezeigten und beschriebenen Ausführungsbeispiele beschränkt.

## Patentansprüche

1. Temperaturfühler (1) zur Messung einer Temperatur, umfassend eine Hülse (2) und ein in der Hülse angeordnetes Messelement (3) welches mit einem Anschlusskabel (5) verbunden ist, wobei die Hülse (2) im Bereich ihrer Öffnung (9) eingepresst (8) ist,
**dadurch gekennzeichnet,**
**dass** die Hülse zumindest im Bereich des Messelementes (3) eine Einbuchtung (6) aufweist, um den Temperaturfühler an einen Messgegenstand anlegen zu können und
**dass** die Hülse (2) vor der Einpressung zumindest im Bereich ihrer Öffnung (9) einen zylindrischen Querschnitt aufweist.

2. Temperaturfühler nach Anspruch 1,
**dadurch gekennzeichnet,**
**dass** die Einpressung (8) einen dichten Abschluss bildet.

3. Temperaturfühler nach Anspruch 1 oder 2,
**dadurch gekennzeichnet,**
**dass** die Einpressung (8) mittels rollieren oder verstemmen erfolgt.

4. Temperaturfühler nach Anspruch 3,
**dadurch gekennzeichnet,**
**dass** das Profil der Einpressung rund oder als polygones Profil erfolgt.

5. Verwendung des Temperaturfühlers nach einem der Ansprüche 1 - 4 als Tauchfühler.
